# FASCICULE DE BREVET EUROPEEN

(11) **EP 0 775 852 B1**
(45) Date de publication et mention de la délivrance du brevet: **22.03.2000**
(21) Numéro de dépôt: 96402517.5
(22) Date de dépôt: 22.11.1996
(51) Int. Cl.: F16H 7/18, F16P 1/02

(54) **Dispositif de transmission comportant un capot de protection perfectionné**
Getriebevorrichtung mit einem Schutzdeckel
Transmission device comprising a protective cover

(30) Priorité: 24.11.1995 FR 9513969
(43) Date de publication de la demande: 28.05.1997
(73) Titulaire: RENAULT, 92109 Boulogne-Billancourt (FR)
(72) Inventeur: Alonso, Fernando, 75015 Paris (FR); Bey, Patrick, 94000 Creteil (FR); Jouault.Jacques, 78180 Montigny le Bretonneux (FR); Machefert, Philippe, 60000 Beauvais (FR)

(56) Documents cités:
- EP-A- 0 297 263
- EP-A- 0 361 899
- AT-B- 382 685
- DE-A- 3 327 865
- DE-C- 4 026 384
- GB-A- 2 261 276

## Description

La présente invention se rapporte aux dispositifs de transmission du type comportant un bâti, un organe flexible de transmission sans fin, un capot de protection ainsi que des moyens de guidage aptes à limiter les débattements de l'organe flexible de transmission sans fin. L'invention concerne plus particulièrement un perfectionnement apporté aux capots de protection utilisés dans de tels dispositifs de transmission.

Classiquement, les dispositifs de transmission utilisant des organes flexibles de transmission sans fin, telles que par exemple les courroies, comportent des moyens de guidage aptes à limiter les débattements des organes de façon à réduire la bruyance et l'usure de ces derniers. La fonction anti-débattement est réalisée par un patin rapporté au bâti et immobilisé par des moyens de fixation. Cette solution a pour inconvénient d'impliquer des opérations de fabrication et de montage du patin et de son moyen de fixation, ainsi qu'un usinage supplémentaire du bâti pour lui permettre de recevoir le patin.

Le document EP-A-297 263 divulgue un exemple de dispositif de transmission selon le préambule de la revendication 1.

La présente invention a pour but de remédier à ces divers inconvénients grâce à un dispositif de transmission présentant un capot de protection qui réalise également la fonction anti-débattement et qui soit simple et économique à réaliser.

Le dispositif de transmission selon l'invention comporte un bâti, un organe flexible de transmission sans fin et un capot de protection venant sur le bâti en recouvrant tout ou partie de l'organe flexible de transmission sans fin, ledit capot de protection comportant un corps intégrant un élément de paroi apte à limiter les débattements dudit organe flexible de transmission sans fin.

Selon l'invention, le dispositif de transmission est caractérisé en ce que le corps du capot de protection est directement surmoulé sur l'élément de paroi.

Selon une autre caractéristique de l'invention, le dispositif de transmission est caractérisé en ce que le capot de protection est réalisé essentiellement à base de matériaux organiques.

Selon une autre caractéristique de l'invention, le dispositif de transmission est caractérisé en ce que l'élément de paroi est réalisé à base de matière plastique thermodurcissable et en ce que le corps est réalisé à base de matière thermoplastique.

Selon une autre caractéristique de l'invention, le dispositif de transmission est caractérisé en ce que l'élément de paroi est réalisé à base de matière plastique phénolique.

Selon une autre caractéristique de l'invention, le dispositif de transmission est caractérisé en ce que l'élément de paroi intègre au moins une bride de fixation du capot de protection sur le bâti.

On comprendra mieux les buts, aspects et avantages de la présente invention, d'après la description donnée ci-après d'un mode de réalisation de l'invention, présenté à titre d'exemple non limitatif, en se référant aux dessins annexés, dans lesquels :
la figure 1 est une vue en coupe suivant la ligne I-I de la figure 2, d'un capot de protection pour une courroie de distribution ;
la figure 2 est une vue de côté du capot de protection fixé sur son bâti ;
la figure 3 est une vue en coupe partielle du capot de protection, suivant la ligne III-III de la figure 1 ;
la figure 4 est une vue en coupe partielle du capot de protection, suivant la ligne IV-IV de la figure 1.

Pour faciliter la lecture des dessins, les mêmes pièces portent les mêmes références d'une figure à l'autre. Par ailleurs, seuls les éléments nécessaires à la compréhension de l'invention ont été représentés.

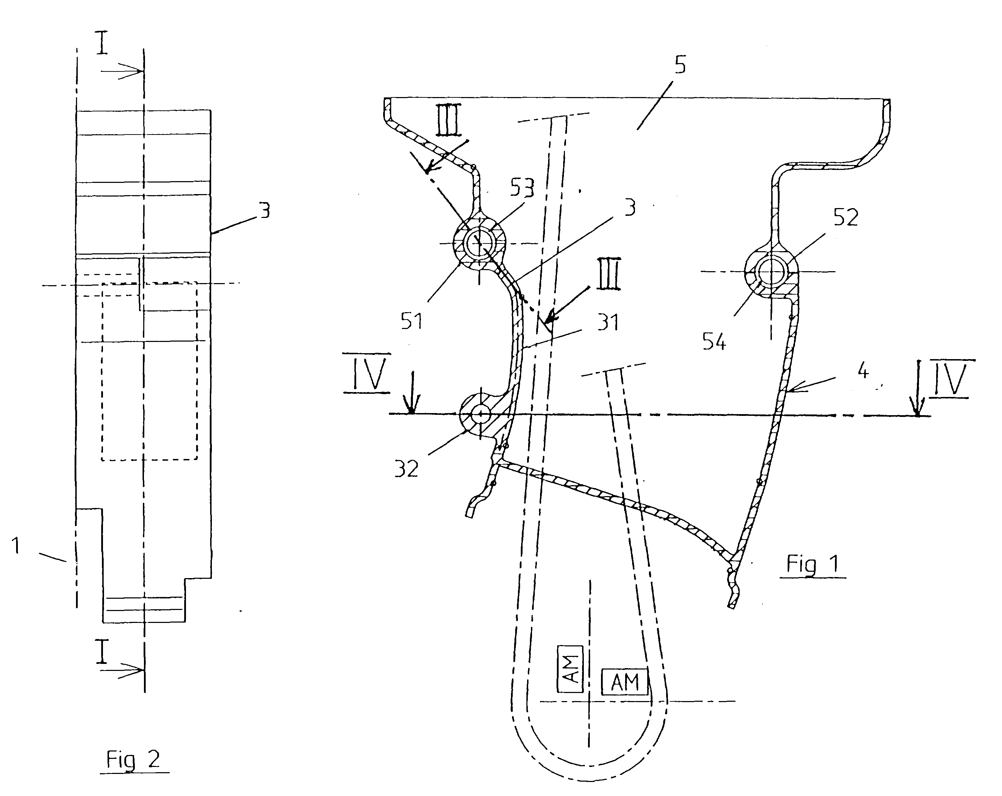

En se reportant aux figures 1 à 4, on voit un bâti 1 sur lequel un capot de protection 4 d'une courroie 2 vient se fixer. Ce bâti peut être un bloc moteur, la courroie étant alors par exemple la courroie de distribution reliant le vilebrequin et l'arbre à cames;

Selon l'invention le capot de protection 4 intègre deux fonctions: une première fonction de protection réalisée en capotant la courroie de façon à interdire tout contact entre une personne ou un objet extérieur et la courroie, et une seconde fonction de limitation des débattements de la courroie. Cette seconde fonction est réalisée par un élément de paroi 3 comportant une surface d'appui 31 interne au capot sur laquelle la courroie vient buter lors de débattements trop importants.

Le capot de protection 4 correspondant au mode de réalisation figuré est composé d'au moins deux matières, l'élément de paroi 3 faisant office de limiteur de débattements étant réalisé dans une matière aux propriétés mécanique adaptées à la friction, le corps du capot de protection 5 étant réalisé dans une matière moins coûteuse.

Selon l'exemple figuré, le corps du capot de protection 5 est réalisé en matériaux organiques et plus particulièrement à base de matériaux thermoplastiques. Le matériau utilisé est choisi en fonction des préconisations du cahier des charges notamment en terme de tenue aux vibrations, on peut ainsi choisir des polyamides ou des polyoléfines renforcés ou non par diverses charges telles des charges minérales ou encore des fibres de verre (par exemple du type >PA 66 GF30<).

L'élément de paroi 3 est lui réalisé de préférence en utilisant des matières plastiques thermodurcissables telles que matières plastiques phénoliques renforcées ou non (par exemple du type >PF GF45<).

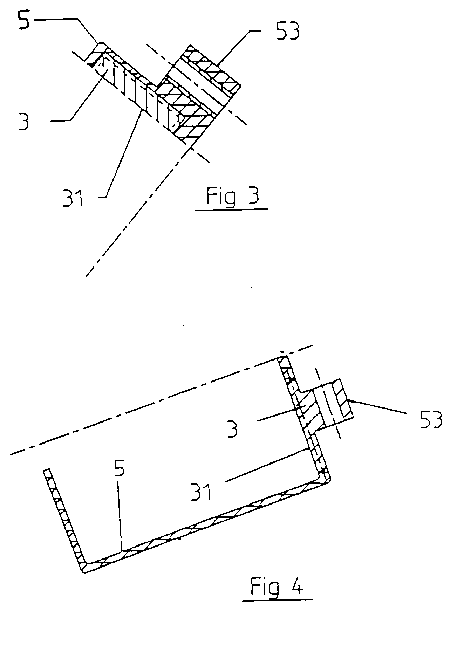

Le capot de protection 4 est maintenu en position sur le bâti à l'aide de brides de fixation 32,51,52. Les brides 51 et 52 en saillie à la périphérie du corps 5 possèdent des inserts métalliques 53,54 permettant le serrage des vis de fixation du capot de protection 4 sans déformation ni fluage des brides. La bride de fixation 32 est elle directement portée par l'élément de paroi 3 dont la matière plastique thermodurcissable est adaptée pour résister aux efforts de serrage de sorte qu'il est alors possible de supprimer l'insert métallique de la bride 32 comme on le voit sur la figure 4.

Conformément aux figures 3 et 4, on voit que l'élément de paroi 3 est directement intégré au corps 5 du capot de protection 4 par surmoulage.

Selon l'invention, l'intégration la fonction limiteur de débattement au capot de protection permet une simplification du bâti. En effet, cette fonction est habituellement réalisée par un patin rapporté sur le bâti et maintenu en place par des moyens de fixation. La suppression de ce patin permet de supprimer le temps nécessaire à l'usinage et au montage du patin rapporté et de ses moyens de fixation. Ce gain de temps est accompagné d'un gain de poids, de coût de fabrication et de gestion, la pièce ayant disparu.

Dans le mode de réalisation présenté, l'intégration dans l'élément de paroi 3 en matière thermodurcissable d'une bride de fixation 32 permet de supprimer le recours à un insert métallique. Cette simplification permet un gain supplémentaire en temps et en coût de fabrication.

Bien entendu, l'invention n'est nullement limitée au mode de réalisation décrit et illustré qui n'a été donné qu'à titre d'exemple.

## Revendications

1. Dispositif de transmission comportant un bâti (1) , un organe flexible de transmission sans fin (2), un capot de protection (4) venant se fixer sur ledit bâti (1) en recouvrant tout ou partie dudit organe flexible de transmission sans fin (2), ledit capot de protection (4) comportant un corps (5) intégrant un élément de paroi (3) apte à limiter les débattements dudit organe flexible de transmission sans fin (2), caractérisé en ce que le corps (5) dudit capot (4) est directement surmoulé sur ledit élément de paroi (3).

2. Dispositif de transmission selon la revendication 1, caractérisé en ce que le capot de protection (4) est réalisé essentiellement à base de matériaux organiques.

3. Dispositif de transmission selon la revendication 2, caractérisé en ce que ledit élément de paroi (3) est réalisé à base de matière plastique thermodurcissable et en ce que ledit corps (5) est réalisé à base de matière thermoplastique.

4. Dispositif de transmission selon la revendication 3, caractérisé en ce que ledit élément de paroi (3) est réalisé à base de matière plastique phénolique.

5. Dispositif de transmission selon l'une quelconque des revendications 2 à 4, caractérisé en ce que ledit élément de paroi (3) intègre au moins une bride de fixation (32) dudit capot de protection (4) sur le bâti (1).

## Patentansprüche

1. Kraftübertragungsvorrichtung, mit einem Gehäuse (1), mit einem flexiblen endlosen Umschlingungsorgan (2) und mit einem Schutzdeckel (4), der am Gehäuse (1) befestigt ist und der ganz oder teilweise das flexible endlose Umschlingungsorgan (2) abdeckt, wobei der Schutzdeckel (4) ein Teil (5) aufweist, in das ein Wandteil (3) integriert ist, das die seitlichen Schwingungen des flexiblen endlosen Umschlingungsorgans begrenzt, dadurch gekennzeichnet, dass das Teil (5) des Schutzdeckels (4) einstückig mit dem Wandteil (3) ausgebildet ist.

2. Kraftübertragungsvorrichtung nach Anspruch 1, dadurch gekennzeichnet, dass der Schutzdeckel (4) im wesentlichen aus organischen Materialien besteht.

3. Kraftübertragungsvorrichtung nach Anspruch 2, dadurch gekennzeichnet, dass das Wandteil(3) aus thermohärtbarem Kunststoff besteht und dass das Teil (5) aus einem thermoplastischen Material besteht.

4. Kraftübertragungsvorrichtung nach Anspruch 3, dadurch gekennzeichnet, dass das Wandteil(3) aus einem phenolhaltigem Kunststoff besteht.

5. Kraftübertragungsvorrichtung nach einem der Ansprüche 2 bis 4, dadurch gekennzeichnet, dass in das Wandteil (3) wenigstens ein Flansch (32) für die Befestigung des Schutzdeckels (4) am Gehäuse (1) integriert ist.

## Claims

1. A transmission device comprising a frame (1), a flexible endless transmission member (2), a protective cover (4) that is secured on the frame (1) and covers all or part of the flexible endless transmission member (2), the protective cover (4) comprising a body (5) including a wall member (3) adapted to limit the displacements of the flexible endless transmission member (2), characterised in that the body (5) of the cover (4) is duplicate moulded directly on the wall member (3).

2. A transmission device as claimed in claim 1, characterised in that the protective cover (4) is made substantially from organic materials.

3. A transmission device as claimed in claim 2, characterised in that the wall member (3) is made from thermosetting plastic material and in that the body (5) is made from thermoplastic material.

4. A transmission device as claimed in claim 3, characterised in that the wall member (3) is made from phenolic plastic material.

5. A transmission device as claimed in any one of claims 2 to 4, characterised in that the wall member (3) includes at least one flange (32) for fastening the protective cover (4) on the frame (1).
